# EUROPÄISCHE PATENTSCHRIFT

(11) **EP 4 049 898 B1**
(45) Veröffentlichungstag und Bekanntmachung des Hinweises auf die Patenterteilung: **03.12.2025**
(21) Anmeldenummer: 22154623.7
(22) Anmeldetag: 01.02.2022
(51) Int. Cl.: B60R 16/02, H01R 31/02, H02G 3/06, H02G 3/08, H02G 15/10, H01H 85/20

(54) **KABELSATZ SOWIE VERFAHREN ZUR KONFIGURATION EINES KABELSATZES**
CABLE SET AND METHOD FOR CONFIGURING A CABLE SET
ENSEMBLE DE CÂBLES, AINSI QUE PROCÉDÉ DE CONCEPTION D'UN ENSEMBLE DE CÂBLES

(30) Priorität: 25.02.2021 DE 102021201798
(43) Veröffentlichungstag der Anmeldung: 31.08.2022
(73) Patentinhaber: LEONI Bordnetz-Systeme GmbH, 97318 Kitzingen (DE)
(72) Erfinder: PEREZ LAZCANO, Fernando, 97204 Höchberg (DE)
(74) Vertreter: FDST Patentanwälte

(56) Entgegenhaltungen:
- EP-A1- 2 945 238
- EP-A1- 3 466 768
- EP-A2- 0 896 409
- WO-A2-2015/007744
- CH-A5- 696 791
- DE-A1- 102015 202 753
- DE-A1- 102017 203 027
- DE-A1- 102018 107 324
- DE-A1- 102018 218 364
- DE-A1- 2 348 895

## Beschreibung

Die Erfindung betrifft einen Kabelsatz, insbesondere einen Hochvolt-Kabelsatz, welcher speziell für ein Kraftfahrzeug und insbesondere für ein Elektro- oder Hybrid-Kraftfahrzeug ausgelegt ist. Die Erfindung betrifft weiterhin ein Verfahren zur Konfiguration eines solchen Kabelsatzes.

Kraftfahrzeuge werden üblicherweise in unterschiedlichen Varianten und Ausstattungslinien angeboten, aus denen der Kunde auswählen kann. Je nach Ausstattungsvariante sind unterschiedliche elektrische Verbraucher angeordnet, sodass unterschiedliche Ausstattungslinien jeweils auch unterschiedlich ausgebildete Kabelsätze aufweisen.

Ein jeweiliger Kabelsatz ist dabei Teil eines Kraftfahrzeug-Bordnetzes. Dieses bzw. auch ein jeweiliger Kabelsatz weist üblicherweise zumindest eine Verteilerbox auf, die zur Leistungsverteilung einer von einer Versorgungsquelle, wie beispielsweise eine Batterie, bereitgestellten Leistung auf die unterschiedlichen Verbraucher ausgebildet ist. Diese Verteilerbox weist eine Mehrzahl an elektrischen Schnittstellen und Komponenten auf, wie beispielsweise Leitungsschutzvorrichtungen, insbesondere Sicherungen. Über eine jeweilige Schnittstelle ist üblicherweise ein jeweiliger abgehender Strom- oder Lastpfad angeschlossen, welcher zu zumindest einem Verbraucher führt. Eine Schnittstelle bildet eine vorbereite Anschlussmöglichkeit. Insbesondere weist eine jeweilige Schnittstelle einen zugewiesenen Bauraum sowie einen Anschluss, beispielsweise einen Anschlussstutzen am Gehäuse der Verteilerbox auf, der zur Durchführung einer Versorgungsader vorgesehen ist.

Der Lastpfad ist dabei mit einer individuellen Sicherung abgesichert. Je nach Ausstattungslinie wird nur ein Teil dieser Schnittstellen verwendet. Die übrigen nicht genutzten Schnittstellen bleiben frei und bilden sogenannte Blind-Schnittstellen. Durch die Bereitstellung von Blind-Schnittstellen werden Kosten verursacht. Insbesondere ist hierdurch auch ein größerer Bauraum erforderlich und das Gewicht nimmt zu.

Speziell im Falle von Hochvolt-Kabelsätzen, die beispielsweise zur Versorgung von starken Verbrauchern, wie beispielsweise ein elektrischer Antrieb, insbesondere ein elektrischer Fahrmotor und/oder ein Traktionsnetz, eingesetzt werden, ist der Bauraumbedarf für derartige Kabelsätze aufgrund der erforderlichen Leitungsquerschnitte sehr hoch. Gleichzeitig sind die Einbauverhältnisse typischerweise beengt.

Bei der Kraftfahrzeug-Entwicklung eines neuen Fahrzeugtyps oder einer neuen Fahrzeugvariante kann es dabei vorkommen, dass nach einer bereits abgeschlossenen ersten Entwicklungsphase, also nach einer abgeschlossenen ersten Konfiguration, bei der bereits ein Kabelsatz- Layout erstellt und insbesondere freigegeben wurde, ein Erweiterungswunsch besteht, gemäß dem beispielsweise ein zusätzlicher Verbraucher standardmäßig oder für eine spezielle Ausstattungslinie hinzugefügt werden soll, für den in der ersten Entwicklungsphase keine Schnittstelle berücksichtigt wurde.

Unter Hochvolt-Kabelsatz wird vorliegend allgemein ein Kabelsatz verstanden, der zum Einsatz in einem Hochvolt-Bordnetz vorgesehen ist. Unter Hochvolt-Bordnetz wird beispielsweise laut ISO 6469-3 (Spannungsklasse B) dabei ein Bordnetz mit einer Spannung von zumindest mehr als 30 V verstanden und speziell bei Elektro- oder Hybridfahrzeugen mit einem elektrischen Antrieb wird hierunter ein Bordnetz mit einer Spannungen von mehr als 300 V und vorzugsweise mehr als 500 V bis hin zu 1000 V oder mehr verstanden.

Für ein derartiges Hochvolt-Bordnetz ist beispielsweise aus der
DE 10 2018 218 364 A1 ein sogenannter Y-Verteiler zu entnehmen, der eine eingehende Versorgungsader auf zwei ausgehende Versorgungsadern aufteilt. Die Versorgungsadern werden jeweils über einen Stutzen zugeführt und im Gehäuse des Verteilers elektrisch miteinander verbunden.

Weitere Verteiler sind beispielsweise zu entnehmen aus WO 2015/007744 A2, EP 0 896 409 A2 oder DE 23 48 895 A1.

Aus der DE 10 2015 202 753 A1 ist ein Hochvolt-System für ein Kraftfahrzeug zu entnehmen, bei dem in einzelnen Versorgungsadern, die von einer Verteilerbox ausgehen und zu einem Verbraucher führen, mithilfe einer Art Steckverbindung eine Schmelzsicherung eingefügt ist.

Aus der DE 10 2017 203 027 A1 ist ein Kabelsatz zu entnehmen, bei dem eine Abzweigdose vorgesehen ist, durch die zwei Versorgungsadern hindurchgeführt sind und in der zwei abzweigende Adern angeschlossen sind. Ergänzend sind diese beiden abzweigenden Adern nachfolgend zu der Abzweigdose in und durch ein Sicherungsgehäuse geführt, in dem ein Sicherungselement angeordnet ist.

Aus der DE 10 2018 107 324 A1 ist eine spezielle Kopplungsvorrichtung zu entnehmen, mit deren Hilfe an eine Hauptleitung eine Abzweigleitung ohne Durchtrennen der Hauptleitung angeschlossen werden kann. Die Abzweigleitung ist dabei zusätzlich abgesichert.

Aus CH 696 791 A5 ist eine Beleuchtung für einen Tunnel zu entnehmen, bei der Abzweigkabel von einem Stammkabel abgehen.

Ausgehend hiervon liegt der Erfindung die Aufgabe zugrunde, eine flexible Konfiguration und insbesondere Erweiterung eines Kabelsatzes zu ermöglichen, bei dem die Kosten sowie der Bauraumbedarf möglichst gering sind.

Die Aufgabe wird gemäß der Erfindung gelöst durch einen Kabelsatz, welcher für ein Kraftfahrzeug vorgesehen ist und im eingebauten Zustand in einem Kraftfahrzeug angeordnet ist. Der Kabelsatz weist zumindest eine Versorgungsader zur Leistungsversorgung eines Verbrauchers auf. Weiterhin weist der Kabelsatz eine Verteilerbox auf, an der die zumindest eine Versorgungsader im eingebauten Zustand angeschlossen ist.

Bei einer solchen Verteilerbox handelt es sich bevorzugt um einen elektrischen Verteiler, welcher insbesondere als Modul ausgebildet ist, das zumindest ein Kunststoff- und/oder Metallgehäuse, insbesondere ein EMV gerechtes Gehäuse aufweist, d. h. ein Gehäuse, das eine gewisse Störfestigkeit gegen jegliche Störfaktoren, beispielsweise gegen Entladung statischer Elektrizität, hochfrequente elektromagnetische Felder, schnelle transiente elektrische Störgrößen, Stoßspannungen, leitungsgeführte Störgrößen, Magnetfelder mit energietechnischer Frequenz, Spannungseinbrüche, Kurzzeitunterbrechungen, Spannungsschwankungen und/oder hochfrequente elektromagnetische Felder aufweist.

Weiterhin weist der Kabelsatz zumindest eine Erweiterungseinheit auf, die ein Gehäuse mit einem Innenraum aufweist, in dem zumindest ein Stromverteiler angeordnet ist. Die zumindest eine Versorgungsader ist unterbrochen und weist einen in den Innenraum eingehenden Endabschnitt sowie einen aus dem Innenraum ausgehenden Endabschnitt auf. Die beiden Endabschnitte sind am zumindest einen Stromverteiler elektrisch angeschlossen. Weiterhin ist zumindest eine Zusatzleitung vorgesehen, die insbesondere ebenfalls als eine Versorgungsader, also als eine einadrige Leitung ausgebildet ist. Die Zusatzleitung ist über ein im Innenraum einliegendes Sicherungselement an dem zumindest einen Stromverteiler angeschlossen.

Die Erweiterungseinheit ist daher als eine zusätzliche Box mit integriertem Sicherungselement in den Strang der zumindest einen Versorgungsader eingebaut. Die einzelnen Elemente, also insbesondere die Endabschnitte der Versorgungsader, das Sicherungselement, der Stromverteiler sowie der Endabschnitt der am Sicherungselement angeschlossenen Zusatzleitung sind dabei alle in dem gemeinsamen Innenraum des Gehäuses angeordnet. In dieses Gehäuse sind die beiden Endabschnitte sowie die Zusatzleitung vorzugsweise dichtend über jeweilige Anschlussstutzen eingeführt.

Diese Ausgestaltung beruht dabei auf der Überlegung, dass diese Erweiterungseinheit eine herkömmliche Blind-Schnittstelle in der Verteilerbox ersetzt, so dass auf eine solche Blind-Schnittstelle in der Verteilerbox verzichtet werden kann. Bevorzugt weist die Verteilerbox keine Blind-Schnittstellen auf, ist also lediglich für eine Basis-Konfiguration des Kabelsatzes vorbereitet. Durch diese Maßnahme werden daher der Bauraumbedarf und damit auch die Kosten reduziert im Vergleich zu einer Ausgestaltung, bei der die Verteilerbox über Blind-Schnittstellen für eine Vielzahl von weiteren potenziellen zusätzlichen-Verbrauchern ausgebildet ist.

Ein weiterer Vorteil bei diesem Konzept mit der Erweiterungseinheit ist darin zu sehen, dass ein bereits bestehender, konfigurierter Kabelsatz nachträglich noch erweitert werden kann, falls also beispielsweise ein zusätzlicher Verbraucher in der Konfiguration einer Ausstattungslinie nachträglich berücksichtigt werden muss, für die also beispielsweise keine Blind-Schnittstelle vorbereitet ist. Die Erweiterungseinheit kann dabei an beliebigen Positionen im Verlauf der zumindest einen Versorgungsader platziert werden, sodass ein geeigneter Einbauraum ausgewählt werden kann. Dieser ist dabei insbesondere beabstandet von der eigentlichen Verteilerbox. Die Erweiterungseinheit ist also insbesondere nicht mit der Verteilerbox unmittelbar verbunden. Zwischen der Erweiterungseinheit und der Verteilerbox verläuft ein Teilstück der Versorgungsader.

Die Erweiterungseinheit mit dem darin enthaltenen Sicherungselement ersetzt daher eine sonst in der Verteilerbox enthaltenen Schnittstelle. Insgesamt ist durch diese Erweiterungseinheit eine modulare und insbesondere auch eine skalierbare Erweiterung eines Bordnetzes zur Integration von weiteren Komponenten in einen Kabelsatz erreicht, insbesondere ohne, dass Blind-Schnittstellen in der Verteilerbox vorgehalten werden müssen. Je nach Bedarf sind daher ein oder auch mehrere derartiger Erweiterungseinheiten im Kabelsatz angeordnet. Durch die Anzahl der Erweiterungseinheiten, über die also jeweils zusätzliche Verbraucher angeschlossen sind, ist daher der Kabelsatz erweiterbar und damit skalierbar.

Unter Versorgungsader wird vorzugsweise allgemein eine einadrige Leitung verstanden, bei der also ein elektrischer Leiter, insbesondere ein Litzenleiter, speziell ein Kupferleiter und/oder Aluminiumleiter, von einer Isolierung umgeben ist. Insbesondere im Falle einer Hochvolt-Anwendung weist die Versorgungsader zusätzlich noch eine Abschirmung auf, die typischerweise als ein Schirmgeflecht ausgebildet ist und sich über die gesamte Länge der Versorgungsader erstreckt. Diese ist dabei typischerweise zwischen einem Zwischenmantel und einem Außenmantel jeweils aus Isoliermaterial angeordnet. Die Abschirmung ist bei Hochvolt-anwendungen speziell auch als Potenzialausgleich ausgestaltet.

Bei dem Bordnetz, bei dem der Kabelsatz eingesetzt ist, handelt sich typischerweise um ein Gleichspannungs-Bordnetz, welches eine Versorgungsquelle, insbesondere eine Batterie aufweist. Bei Hochvolt-Anwendungen sind die Verbraucher, insbesondere Hochvolt-Komponenten, über die zumindest eine Versorgungsader mit dem Pluspol der Batterie zumindest mittelbar, beispielsweise über die Verteilerbox verbunden. Bevorzugt ist jeder Verbraucher über exakt zwei Versorgungsadern angeschlossen, die mit dem Pluspotenzial sowie mit Minuspotenzial verbunden sind.

Im Falle einer Niedervolt-Anwendung mit einer Spannung von vorzugsweise kleiner 100V, insbesondere kleiner 60V, ist jeder Verbraucher, insbesondere Niedervolt-Komponente, über zumindest eine Versorgungsader angeschlossen, die mit dem Pluspotenzial verbunden ist. Des Weiteren dient bei Niedervolt-Anwendungen beispielsweise die Fahrzeugkarosserie als Massepotenzial, auch hersteller-übergreifend mit "Klemme 31" bezeichnet, wobei sich dieses über das gesamte Fahrzeug erstreckt und gleichzeitig als Rückleiter für das Bordnetz dient.

Wie bereits erwähnt, sind vorzugsweise zur Leistungsversorgung des Verbrauchers bei Hochvolt-Anwendungen mehrere, insbesondere jedoch genau zwei Versorgungsadern vorgesehen. Jede dieser Versorgungsader ist dabei unterbrochen und jeweils mit einer insbesondere einadrige Zusatzleitung verbunden. Diese Zusatzleitungen führen zu dem zusätzlichen Verbraucher. Bevorzugt ist dabei lediglich die eine der Zusatzleitung über das zusätzliche Sicherungselement mit der einen der beiden Versorgungsadern verbunden, und zwar insbesondere mit der Versorgungsader, welche mit dem Pluspol der Batterie verbunden ist. Bei dieser Versorgungsader handelt sich insbesondere um eine abgesicherte Versorgungsader, die also bereits über ein Sicherungselement mit der Batterie verbunden ist. Das Sicherungselement ist dabei in der Verteilerbox angeordnet. Insofern liegt hier also eine hintereinander Schaltung zweier Sicherungselemente vor, d. h. die Versorgung des zusätzlichen Verbrauchers führt über das in der Verteilerbox angeordnete Sicherungselement für die Versorgungsader und zusätzlich über das zusätzliche Sicherungselement in der Erweiterungseinheit. Das zusätzliche Sicherungselement ist dabei für einen geringeren Nennstrom als das Sicherungselement in der Verteilerbox ausgebildet.

Die zweite Zusatzleitung ist vorzugsweise unmittelbar und direkt, also ohne Zwischenschaltung eines Sicherungselementes an der anderen Versorgungsader angeschlossen, die insbesondere mit Minuspotenzial verbunden ist. Bei dieser anderen Versorgungsader handelt es sich um eine nicht direkt über die Erweiterungseinheit abgesicherte Leitung.

Für den Anschluss der zweiten Zusatzleitung an der anderen Versorgungsader ist bevorzugt eine eigene, zusätzliche Verteilereinheit vorgesehen, die insbesondere nach Art eines herkömmlichen Y-Verteilers und damit speziell ohne integriertes Sicherungselement ausgebildet ist. Es werden daher zwei getrennte Baueinheiten mit eigenen Gehäusen verwendet, einmal die Erweiterungseinheit und einmal die zusätzliche Verteilereinheit. Sowohl bei der Erweiterungseinheit als auch bei der Verteilereinheit ist vorzugsweise genau eine Versorgungsader über den einliegenden Stromverteiler durchgeführt, wobei jeweils vorzugsweise genau eine Zusatzleitung abzweigt, die in dem einen Fall über das Sicherungselement und in dem anderen Fall ohne ein solches Sicherungselement am Stromverteiler und damit an der Versorgungsader angeschlossen ist.

Ein besonderer Vorteil der Verwendung von zwei getrennten Baueinheiten ist in der räumlichen Trennung der beiden getrennten (individuellen) Einheiten zu sehen. Dies ermöglicht es beispielsweise, die beiden Einheiten an unterschiedlichen Positionen anzuordnen, was insbesondere bei beengten Einbauräumen von besonderer Bedeutung sein kann. Bevorzugt sind die beiden Einheiten daher auch entlang des Verlaufs der Versorgungsadern an unterschiedlichen Positionen, also beabstandet und in Längsrichtung der Versorgungsadern versetzt zueinander angeordnet.

In bevorzugter Ausgestaltung sind die Erweiterungseinheit und die zusätzliche Verteilereinheit baugleich und identisch ausgebildet, bis auf den Unterschied, dass anstelle des Sicherungselementes in der Erweiterungseinheit in der zusätzlichen Verteilereinheit eine Stromschiene angeordnet ist. Bei dieser handelt es sich um einen insbesondere massiven Leiter, speziell ein Verbindungsblech, welches zwei Anschlussstellen elektrisch miteinander verbindet. Bei der Erweiterungseinheit ist das zusätzliche Sicherungselement an diesen beiden Anschlussstellen angeschlossen. Über diese Stromschiene ist daher die weitere Zusatzleitung mit dem Stromverteiler verbunden.

Damit ist ein Gleichteileprinzip verwirklicht und für die Erweiterungseinheit und für die zusätzliche Verteilereinheit werden die identischen Gehäuse sowie Anschlusselemente verwendet.

Gemäß einer bevorzugten Ausführungsvariante, vorzugsweise alternativ zu der Variante mit den zwei getrennten Baueinheiten, sind mehrere, vorzugsweise zwei Versorgungsadern in und durch das gemeinsame Gehäuse der Erweiterungseinheit geführt. Weiterhin sind mehrere Stromverteiler in dem gemeinsamen Gehäuse und in dem Innenraum vorgesehen, wobei der eingehende Endabschnitt sowie der ausgehende Endabschnitt einer jeweiligen Versorgungsader an einem jeweiligen Stromverteiler elektrisch angeschlossen sind, wobei weiterhin die mindestens eine Zusatzleitung über das zusätzliche Sicherungselement an einem der Stromverteiler angeschlossen ist. Das gemeinsame Gehäuse ist beispielsweise als eine Box ausgebildet, die mit einem Deckel verschließbar ist. Bevorzugt sind in dem Gehäuse lediglich die Stromverteiler und das zumindest und vorzugsweise genau eine Sicherungselement angeordnet. Es befinden sich keine weiteren elektrische oder elektronische Komponenten innerhalb des gemeinsamen Gehäuses.

Bei dieser Ausführungsvariante sind mehrere, insbesondere genau zwei Versorgungsadern durch das Gehäuse hindurchgeführt. Insbesondere, jedoch nicht zwingend, sind die beiden Versorgungsadern am Minuspotenzial sowie am Pluspotenzial angeschlossen, so dass lediglich eine Baueinheit für die Einbindung eines zusätzlichen Verbrauchers in das Bordnetz erforderlich ist.

In einer Variante ist je eine Zusatzleitung an genau einer der Versorgungsadern angeschlossen. Bevorzugt ist dabei lediglich eine der Zusatzleitungen über das zusätzliche Sicherungselement an der einen Versorgungsader angeschlossen, welche mit dem Pluspotenzial verbunden ist.

Bei einer alternativen Variante sind mehrere Zusatzleitungen, beispielsweise zwei Zusatzleitungen, gemeinsam mit einer der Versorgungsadern verbunden. Dabei ist beispielsweise jede der Zusatzleitungen über jeweils ein Sicherungselement mit dieser Versorgungsader verbunden oder die Zusatzleitungen sind gemeinsam an einem gemeinsamen Sicherungselement angeschlossen.

Wie ebenfalls bereits erwähnt, ist der Verbraucher über die zumindest eine Versorgungsader im eingebauten Zustand an eine Strom- und Versorgungsquelle, insbesondere eine Bordnetz-Batterie angeschlossen. Bevorzugt ist die Verteilerbox zwischen der Versorgungsquelle und dem Verbraucher angeordnet, wobei von der Verteilerbox weitere Versorgungsadern zur Versorgung von weiteren Verbrauchern abgehen. Bei der Verteilerbox handelt sich daher um eine klassische Verteilerbox, an der mehrere durch die jeweiligen Versorgungsadern gebildete Lastpfade angeschlossen sind, die jeweils über ein Sicherungselement abgesichert sind und die zu den weiteren Verbrauchern führen.

In bevorzugter Ausgestaltung weist die Zusatzleitung einen insbesondere deutlich geringeren Leiterquerschnitt als die Versorgungsader auf. Insgesamt ist daher die Zusatzleitung, also speziell der Leiter der einadrige Zusatzleitung für geringere Ströme ausgelegt. So liegt beispielsweise die Querschnittsfläche des Leiters der Zusatzleitung bei weniger als 50 %, weniger als 20 % oder weniger als 10 % der Querschnittsfläche der Versorgungsader. Sind mehrere Zusatzleitungen an einer Versorgungsader angeschlossen, so gelten die vorhergehenden Ausführungen für die Gesamtheit der Leiter und insbesondere für die Querschnittsfläche der Gesamtheit der Leiter der Zusatzleitungen.

Der in der Erweiterungseinheit einliegende Stromverteiler ist allgemein nach Art einer Stromschiene und speziell als ein Metallbauteil ausgebildet oder weist zumindest ein solches auf. An diesem Metallbauteil sind die Endabschnitte sowie das Sicherungselement jeweils über ein Anschlusselement befestigt und insbesondere angeschraubt. Hierzu sind an den Endabschnitten der Versorgungsadern üblicherweise Terminals, beispielsweise sogenannte Kabelschuhe angebracht. Diese sind einerseits mit dem Leiter der Versorgungsader beispielsweise durch Löten oder Schweißen verbunden und weisen typischerweise ein angeformtes Anschlussblech mit einem Durchgangsloch auf.

In einer Ausführungsvariante weist der Stromverteiler bevorzugt eine herkömmliche Stromschiene auf, welche insbesondere durch eine flache Blechschiene, nachfolgend als Verteilerblech bezeichnet, gebildet ist. Weiterhin weist der Stromverteiler Anschlussbolzen auf, die mit dem Verteilerblech elektrisch verbunden sind. Die jeweiligen Anschlusselemente der Endabschnitte bzw. des Sicherungselements sind jeweils über diese Bolzen angeschlossen, insbesondere mittels einer Schraubbefestigung.

Gemäß einer bevorzugten Ausgestaltung weist das Gehäuse ein inneres Gehäuse aus einem Isolierwerkstoff auf, welches den Innenraum umschließt. Die Anschlussbolzen weisen jeweils einen verbreiterten Fußbereich auf, mit dem sie in dem inneren Gehäuse und damit im Isolierwerkstoff eingebettet sind. Die Anschlussbolzen bilden dabei vorzugsweise mit dem inneren Gehäuse eine vorgefertigte Baueinheit. Bei dem inneren Gehäuse handelt es sich insbesondere um ein (Spritz-) Gussbauteil. Die Anschlussbolzen - und vorzugsweise nur diese - werden direkt beim (Spritz-) Gießprozess als Einlegeteile von dem Isoliermaterial umgossen. Damit ist eine vereinfachte Montage beim Anschließen der Versorgungsader und der Zusatzleitung ermöglicht. Das innere Gehäuse weist bevorzugt zwei Halbschalen auf, die den Innenraum umschließen. Weiterhin weist das innere Gehäuse insbesondere Anschlussstutzen auf, durch die die Versorgungsader sowie die Zusatzleitung eingeführt sind.

Die Anschlussbolzen bilden am Fußbereich vorzugsweise weiterhin ein durch eine Oberseite des verbreiterten Fußbereichs gebildetes Widerlager aus, welches aus dem Isolierwerkstoff hervorsteht. Das Verteilerblech ist weiterhin als ein separates Bauteil mit Löchern ausgebildet, durch die die Anschlussbolzen geführt sind. Im angeschlossenen Zustand ist ein jeweiliges Anschlusselement zusammen mit dem Verteilerblech gegen das Widerlager verspannt, insbesondere verschraubt. Die Anschlussbolzen sind dabei als Schraubbolzen ausgebildet.

Das Sicherungselement weist vorzugsweise zwei Anschlusselementen auf, die nach Art von Anschlussblechen mit einem darin eingebrachtem Durchgangsloch ausgebildet sind. Diese beiden Anschlusselemente sind dabei insbesondere einander gegenüberliegend angeordnet, bilden also gegenüberliegende Enden des Sicherungselements aus. Mit dem einen Anschlusselement ist das Sicherungselement dabei am Stromverteiler und mit dem anderen Anschlusselement an der Zusatzleitung, vorzugsweise über ein Terminal angeschlossen. Der Anschluss am Stromverteiler sowie an der Zusatzleitung erfolgt wiederum vorzugsweise jeweils über eine Schraubverbindung.

Zum Anschließen der Zusatzleitung ist weiterhin vorzugsweise ein weiterer Anschlussbolzen vorgesehen, welcher insbesondere ebenso wie die Anschlussbolzen im Bereich des Verteilerblechs ausgebildet ist und mit einem verbreiterten Fußbereich im inneren Gehäuse eingebettet ist.

Der Stromverteiler mit den daran angebrachten Anschlusselementen ist allgemein von einem Isolierteil umgeben. Bei diesem handelt es sich entweder um das innere Gehäuse und / oder um ein Gussteil aus einem Isoliermaterial, in dem die Komponenten insgesamt eingegossen sind. Das Gussteil ist beispielsweise als zusätzliches Bauteil innerhalb des inneren Gehäuses angeordnet oder alternativ zu diesem vorgesehen.

Das als Gussteil ausgebildete Isolierteil umgibt gemäß einer Ausgestaltung den Stromverteiler vollständig und zusätzlich lediglich noch die angebrachten Anschlusselemente teilweise oder vollständig. Die weiteren Bauteile, wie beispielsweise das Sicherungselement oder die weitergehenden Leitungsabschnitte sind demgegenüber nicht von dem Isolierteil umgeben. Der verbleibende Innenraum des Gehäuses, speziell des inneren Gehäuses der Erweiterungseinheit ist typischerweise frei, also nicht ausgegossen.

In einer alternativen Ausgestaltung umgibt das Isolierteil den Stromverteiler sowie das Sicherungselement und die Anschlusselemente, mithin alle leitenden Komponenten. Das als Gussteil ausgebildete Isolierteil bildet daher selbst ein isolierendes Schutzgehäuse innerhalb des Gehäuses.

Bevorzugt ist mit Hilfe dieses Isolierteils eine Verdrehsicherung ausgebildet, sodass insbesondere das angeschlossene Sicherungselement über das Isolierteil, speziell das Gussteil in einer gewünschten Drehposition gehalten ist.

Die bevorzugte Ausgestaltung ist die oben erwähnte, bei der lediglich die Fußbereiche der Anschlussbolzen im Material des inneren Gehäuses eingebettet sind. Im Übrigen definiert das innere Gehäuse den freien Innenraum.

In bevorzugter Ausgestaltung weist die zumindest eine Versorgungsader eine Abschirmung auf, ist also als eine geschirmte Leitung ausgebildet.

In bevorzugter Weiterbildung weist das Gehäuse ein leitendes Schirmgehäuse sowie Anschlussstutzen für den eingehenden und den ausgehenden Endabschnitt auf. Die Abschirmung ist dabei jeweils im Bereich der Anschlussstutzen mit dem Schirmgehäuse elektrisch leitend verbunden.

Das Gehäuse ist vorzugsweise insgesamt mehrschalig, insbesondere dreischalig ausgebildet und weist das innere Gehäuse, das Schirmgehäuse sowie ein äußeres Gehäuse aus einem Isolierwerkstoff auf.

Bevorzugt sind das innere Gehäuse sowie das Schirmgehäuse aus zwei Halbschalen mit einer horizontalen Teilungsebene ausgebildet. Beim Schirmgehäuse sind die beiden Halbschalen durch geschlossene Blechbauteile gebildet. Das äußere Gehäuse ist demgegenüber bevorzugt in Längsrichtung geteilt und lässt sich in Längsrichtung nach Art eines Steckergehäuses zusammenstecken.

Alternativ oder ergänzend zu dieser dreiteiligen Ausbildung des Gehäuses ist die Schirmlage zum Innenraum beispielsweise mit einer Isolierlage versehen und / oder es ist das zuvor beschriebene Isolierteil vorgesehen, so dass eine elektrische Kontaktierung mit den einliegenden Bauteilen vermieden ist. Die Außenlage des Gehäuses ist typischerweise wiederum nichtleitend und insbesondere durch das beschriebene Außengehäuse gebildet, welches das die Schirmlage bildende metallische Schirmgehäuse vollständig aufnimmt.

Das Gehäuse ist insgesamt zumindest zweilagig ausgebildet mit einer leitenden Lage, speziell durch ein geformtes Blech gebildet, welches also die Schirmfunktion übernimmt und insbesondere durch das Schirmgehäuse gebildet ist, sowie mit zumindest einer weiteren Isolierlage, die entweder als Außenanlage und/oder als Innenlage ausgebildet ist. Die Innenlage und die Außenlage sind dabei insbesondere durch das innere Gehäuse sowie das äußere Gehäuse gebildet.

In bevorzugter Ausgestaltung weist ein jedes der drei Gehäuse ausgewählt aus innerem Gehäuse, Schirmgehäuse und äußeres Gehäuse jeweils Anschlussstutzen für die Leitungen auf, nämlich für die Endabschnitte der Versorgungsader sowie für die Zusatzleitung. Die Leitungen weisen jeweils eine insbesondere als metallisches Schirmgeflecht ausgebildete Schirmung auf, welche zwischen einer Metallhülse und einem der Anschlussstutzen des Schirmgehäuses geklemmt ist. Dadurch ist eine zuverlässige uns sichere Schirmanbindung erzielt. Weiterhin ist ein jeweiliger Außenmantel der Leitungen über ein ringförmiges Dichtelement zum jeweiligen Anschlussstutzen des äußeren Gehäuses abgedichtet ist. Das Dichtelement liegt daher zwischen einer Innenwandung des insbesondere einteiligen und rohrförmigen Anschlussstutzens des äußeren Gehäuses und dem Außenmantel ein. Der Anschlussstutzen des äußeren Gehäuses übersteht hierzu den Anschlussstutzen des Schirmgehäuses in Längsrichtung.

Bei dem Sicherungselement handelt es sich vorzugsweise um eine Schmelzsicherung. Das Sicherungselement ist allgemein insbesondere für einen Nennstrom von zumindest 10A, bevorzugt von zumindest 20A und insbesondere von zumindest 50A bis 100A ausgebildet. Hierunter wird verstanden, dass das Sicherungselement entsprechend einer herstellercharakteristischen Sicherungskennlinie auslöst, insbesondere wenn also der aktuelle Strom den Nennstrom gemäß der Sicherungskennlinie übersteigt.

Bei dem Kabelsatz handelt sich weiterhin bevorzugt um einen Hochvolt-Kabelsatz, welcher also zum Einsatz in einem Hochvolt-Bordnetz vorgesehen ist mit einer Bordnetzspannung von größer 30V und insbesondere von größer zumindest 300V oder auch von größer 500V bis hin zu 1000V oder mehr, wie dies eingangs definiert wurde. Weiterhin ist eine jede der Versorgungsadern dabei für einen Strom von mehr als 30A und insbesondere von mehr als 100A ausgebildet. Der Leiter einer jeweiligen Versorgungsader besteht dabei typischerweise aus Kupfer. Der Leiterquerschnitt liegt beispielsweise bei über 30 mm² und insbesondere in einem Bereich zwischen 30 und 70 mm² bevorzugt bei 50 mm². Die abzweigende Zusatzleitung weist demgegenüber einen Leiterquerschnitt auf, der um den Faktor 5-10 geringer ist und beispielsweise im Bereich von 4 mm² bis 10 mm² liegt und insbesondere beispielsweise 6 mm² beträgt.

Die Versorgungsader ist insbesondere zur Versorgung eines elektrischen Fahrantriebs des Kraftfahrzeugs ausgebildet und ist im eingebauten Zustand im Fahrzeug mit diesem zumindest mittelbar verbunden. Bevorzugt ist die Versorgungsader zur Versorgung einer Leistungselektronik des Fahrantriebs mit Gleichstrom oder Gleichspannung ausgebildet, wobei die Leistungselektronik einen Umrichter, speziell einen Wechselrichter, insbesondere aber einen DC/AC-Wandler aufweist.

Vereinfacht ausgedrückt wandelt die Leistungselektronik die Gleichspannung aus der Batterie in eine Wechselspannung um, worüber der elektrische Fahrantrieb mit einem Wechselstrom versorgt und angetrieben wird.

Die Aufgabe wird weiterhin gelöst durch ein Verfahren zur Konfiguration eines Kabelsatzes, bei dem Rahmen einer ersten Konfiguration ein erstes Kabelsatz-Layout festgelegt wird. Dieses weist zumindest eine Versorgungsader zur Leistungsversorgung eines Verbrauchers mit einem vorgegebenen Verlegepfad auf, wobei die Versorgungsader an einer Verteilerbox angeschlossen ist. Speziell verläuft der Verlegepfad von einer Versorgungsquelle über die Verteilerbox zu einem Verbraucher.

Im Rahmen einer Erweiterungs-Konfiguration wird schließlich ein zweites, erweitertes Kabelsatz-Layout festgelegt, welches das erste Kabelsatz-Layout heranzieht und auf diesem aufbaut. Und zwar wird es um eine Zusatzleitung zur Leistungsversorgung eines zusätzlichen Verbrauchers erweitert. Hierzu ist eine Erweiterungseinheit vorgesehen, wie sie zuvor beschrieben wurde. Über diese Erweiterungseinheit ist der zusätzliche Verbraucher über ein in der Erweiterungseinheit angeordnetes Sicherungselement angeschlossen.

Sofern vorliegend von "Konfiguration" gesprochen wird, so wird hierunter das Festlegen des Designs des Kabelsatzes in einer Planungsphase verstanden. Der besondere Vorteil dieses Verfahrens ist darin zu sehen, dass nach einer abgeschlossenen erst-Konfiguration, bei der beispielsweise das erste Kabelsatz-Layout schon für den Einbau freigegeben ist bzw. schon in der Serie eingesetzt wird, das Kabelsatz-Layout vergleichsweise einfach geändert werden kann. Und zwar insbesondere ohne, dass eine Blind-Schnittstelle herangezogen wird.

Ein Ausführungsbeispiel der Erfindung wird nachfolgend anhand der Figuren näher erläutert. Diese zeigen jeweils in vereinfachten Darstellungen:
Fig 1 ein erstes Kabelsatz-Layout in herkömmlicher Weise,
Fig 2 ein mit einer Erweiterungseinheit versehenes zweites Kabelsatz-Layout gemäß der Erfindung,
Fig 3 eine perspektivische und ausschnittsweise Ansicht auf eine Erweiterungseinheit,
Fig 4 eine Schnittansicht durch die Erweiterungseinheit gemäß der Schnittlinie 4-4 in Fig. 3
Fig 5 eine Darstellung der elektrischen Komponenten innerhalb der Erweiterungseinheit,
Fig 6 eine Darstellung eines inneren Gehäuses mit den angeschlossenen Leitungen sowie
Fig. 7 eine Darstellung eines Schirmgehäuses mit den angeschlossenen Leitungen.

In den Figuren sind gleichwirkende Teile mit den gleichen Bezugszeichen versehen.

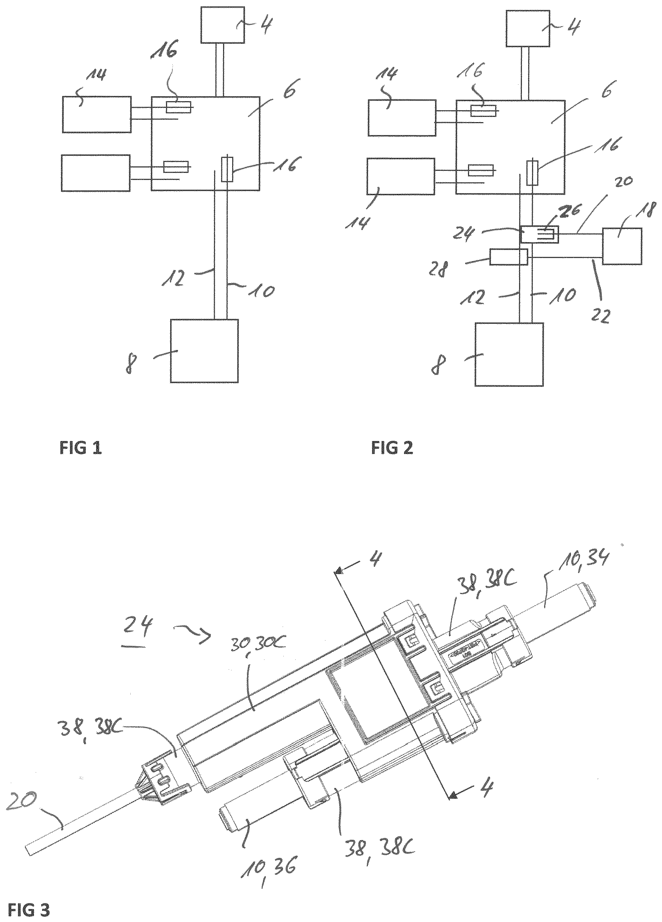

Ein in den Figuren 1 und 2 dargestellter Kabelsatz 2 ist jeweils Teil eines Hochvolt-Bordnetzes eines Kraftfahrzeuges. Figur 1 zeigt dabei ein erstes Kabelsatz-Layout und Figur 2 ein zweites Kabelsatz-Layout. Die Kabelsätze 2 weisen jeweils eine Batterie 4 auf, an die eine Verteilerbox 6 angeschlossen ist. Über diese wird ein Verbraucher 8 über zwei Versorgungsadern 10, 12 versorgt. An der Verteilerbox 6 sind weitere Verbraucher 14 ebenfalls wiederum über zwei Versorgungsadern angeschlossen. Über jeweils die eine der Versorgungsadern 10 wird über ein Sicherungselement 16 eine abgesicherte elektrisch leitende Verbindung mit einem Pluspol der Batterie 4 hergestellt. Die jeweils andere der Versorgungsadern 12 ist mit Minuspotenzial und/oder Massepotenzial beispielsweise mit dem Minuspol der Batterie 4 verbunden.

Bei dem in der Figur 2 dargestellten Kabelsatz 2 gemäß dem zweiten Kabelsatz-Layout ist ergänzend zu dem in der Figur 1 dargestellten Kabelsatz 2 ein zusätzlicher Verbraucher 18 angeordnet. Dieser ist dabei nicht direkt an der Verteilerbox 6 angeschlossen. Vielmehr ist der zusätzliche Verbraucher 18 über zwei einadrige Zusatzleitungen 20, 22 mit den beiden Versorgungsadern 10, 12 verbunden. Für die Verbindung der einen Zusatzleitung 20 mit der Versorgungsader 10, die mit dem Pluspol der Batterie 4 verbunden ist, ist eine Erweiterungseinheit 24 vorgesehen. In dieser ist ein zusätzliches Sicherungselement 26 angeordnet, über welches die Zusatzleitung 20 mit der Versorgungsader 10 verbunden ist. Die andere Zusatzleitung 22 ist über eine Verteilerbox 28 an die andere Versorgungsader 12 angeschlossen, welche mit Minuspotenzial verbunden ist. Hierbei erfolgt ein unmittelbarer Anschluss der Zusatzleitung 22 an die Versorgungsader 12, also ohne Zwischenschaltung eines Sicherungselements.

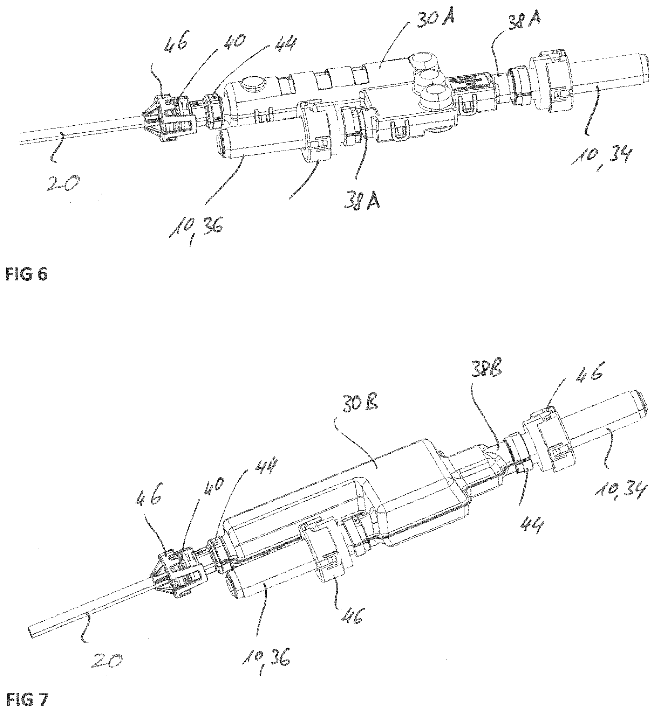

Der Aufbau der Erweiterungseinheit 24 sowie der Anschluss der Zusatzleitung 20 an der Versorgungsader 10 ist beispielhaft in den Fig. 3 bis Fig. 7 näher dargestellt:
Die Erweiterungseinheit 24 ist zunächst nach Art einer Abzweigdose ausgebildet und weist ein Gehäuse 30 auf. Dieses ist im Ausführungsbeispiel durch drei Teilgehäuse gebildet, nämlich ein inneres Gehäuse 30A, ein Schirmgehäuse 30B sowie ein äußeres Gehäuse 30B. Das innere Gehäuse 30A sowie das Schirmgehäuse 30B, die in den Fig. 6 und 7 erkennen sind, sind jeweils vorzugsweise durch zwei Halbschalen gebildet. Die beiden Halbschalen sind entlang einer horizontalen Ebene (Ebene parallel zur Erstreckungsrichtung der Versorgungsader 10) geteilt.

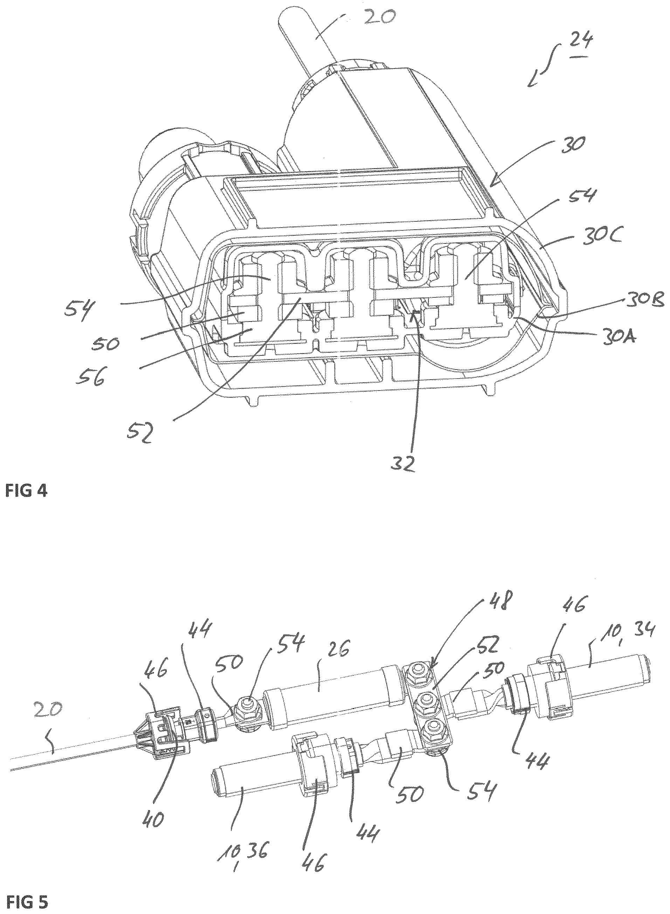

Das äußere Gehäuse 30A, welches in der Fig. 3 zu erkennen ist, besteht ebenfalls aus zwei Gehäuseteilen, die jedoch in Längsrichtung und damit in Erstreckungsrichtung der Versorgungader 10 geteilt ist. Die Gehäuseteile der einzelnen Gehäuse 30A, 30B, 30C sind jeweils in geeigneter Weise miteinander verbunden, beispielsweise über Rastelemente. Das innere Gehäuse 30A definiert einen freien Innenraum 32 (vgl. hierzu insbesondere Fig. 4), in dem die einzelnen elektrischen Komponenten einliegen.

Im geschlossenen Zustand ist das Gehäuse 30 insgesamt zur Umgebung abgedichtet.

Wie insbesondere anhand der Fig. 3 in Verbindung mit Fig. 5 zu erkennen ist, ist im Bereich der Erweiterungseinheit 24 die Versorgungsader 10 unterbrochen und weist einen in das Gehäuse 30 eingehenden Endabschnitt 34 sowie einen aus dem Gehäuse 30 ausgehenden Endabschnitt 36 auf. Die Zusatzleitung 20 wird ebenfalls in den gemeinsamen Innenraum 32 eingeführt. Das Gehäuse 30 weist zum Einführen der einzelnen Endabschnitte 34, 36 und der Zusatzleitung 20 jeweils einen Anschlussstutzen 38 auf, durch den die jeweilige Leitung unter Zwischenlage eines Dichtelements 40 abgedichtet eingeführt wird. Bevorzugt weist jedes der drei Teilgehäuse 30A, 30B, 30C einen Anschlussstutzen 38A, 38B, 38C auf, die gemeinsam den Anschlussstutzen 38 des Gehäuses bilden.

Bei den Versorgungsadern 10, 12 handelt sich insbesondere jeweils um eine geschirmte Leitung. Diese weist einen zentralen Leiter auf, welcher in unmittelbarer Reihenfolge zunächst von einem isolierenden Zwischenmantel, anschließend von einer insbesondere als Schirmgeflecht ausgebildeten Abschirmung und schließlich von einem isolierenden Außenmantel umgeben ist. Die Abschirmung ist mit dem Schirmgehäuse 30B elektrisch kontaktiert. Hierzu ist beispielsweise eine erste Schirmhülse vorgesehen, die beispielsweise zwischen Abschirmung und Zwischenmantel geschoben ist. Weiterhin ist eine zweite metallische Schirmhülse 44 vorgesehen, welche über den Anschlussstutzen 38B des Schirmgehäuses 30B geschoben ist und die die freigelegte Abschirmung zwischen sich und dem Anschlussstutzen 38B einklemmt.

Zur Abdichtung nach Außen sind die Leitungen, also die Endabschnitte 34,36 sowie die Zusatzleitung 20 jeweils mittels eines ringförmigen Dichtelementes 40 abgedichtet in den Anschlussstutzen 38C des äußeren Gehäuses eingeführt. Schließlich ist noch eine Befestigungskappe 46 (aus Kunststoff) vorgesehen, die nach Art einer Hülse ausgebildet ist und mit der die jeweilige Leitung am Gehäuse 30 zugfest fixiert wird.

Im Innenraum 32 sind als wesentliche Bauteile ein Stromverteiler 48 sowie das bereits erwähnte zusätzliche Sicherungselement 26 angeordnet. Der Leiter des eingehenden Endabschnitts 34 ist endseitig mit einem als Kabelschuh ausgebildeten Anschlusselement 50 verbunden und über dieses mit dem Stromverteiler 48 kontaktiert. In gleicher Weise ist auch der Leiter des ausgehenden Endabschnitts 36 mit dem Stromverteiler 48 kontaktiert. Über den Stromverteiler 48 erfolgt daher eine direkte elektrische und unmittelbare Verbindung der Leiter der beiden Endabschnitte 34, 36.

An dem Stromverteiler 48 ist die Zusatzleitung 20 lediglich mittelbar über das weitere Sicherungselement 26 angeschlossen. Das Sicherungselement 26 weist dabei beidseitig an seinen gegenüberliegenden Stirnenden jeweils nach Art von Blechen ausgebildete Anschlusselemente 50 auf, die jeweils Durchgangslöcher aufweisen, über die eine Schraubkontaktierung einerseits mit dem Stromverteiler 48 und andererseits mit dem Leiter der Zusatzleitung 20 erfolgt. Letztere weist endseitig wiederum ein als Kabelschuh ausgebildetes Anschlusselement 50 auf, mit dem sie an dem Anschlusselement 50 des zusätzlichen Sicherungselements 26 angeschraubt ist.

In einer hier nicht näher dargestellten Variante ist der Stromverteiler 48 ist beispielsweise nach Art eines sich in einer Querrichtung erstreckenden bolzenförmigen Gebildes ausgebildet, an dem senkrecht zur Querrichtung die einzelnen Komponenten angeschlossen sind. Für den Anschluss zumindest eines der beiden Endabschnitte 34, 36 weist der Stromverteiler 48 zumindest in einem Mittenbereich ein senkrecht zur Querrichtung abstehendes Anschlussblech auf. An den gegenüberliegenden Stirnseiten des Stromverteilers 48 ist einerseits das zusätzliche Sicherungselement 26 und andererseits der ausgehenden Endabschnitt 36 über jeweils eine Befestigungsschraube angeschlossen. Ein Schraubenkopf, speziell auf Seiten des Sicherungselements 26, weist Formschlusselemente auf, wobei hierzu insbesondere ein umlaufender zinnenförmiger Kragen ausgebildet ist.

Der Stromverteiler 48 kann von einem Gusselement umgossen sein. Dieses umgibt den Stromverteiler 48 vorzugsweise vollständig sowie die Anschlusselemente 50 zumindest teilweise oder auch vollständig, insbesondere jedoch ohne dass die weiteren Komponenten, wie beispielsweise die Endabschnitte 34, 36 sowie das weitere Sicherungselement 26 umgossen sind. Der Innenraum 32 ist hierbei nicht vollständig mit einer Gussmasse ausgefüllt. Speziell aufgrund der Formschlusselemente des Schraubenkopfes ist über die Gussmasse eine Verdrehsicherung ausgebildet.

Gemäß der bevorzugten und insbesondere anhand der Fig. 4 und 5 zu erkennenden Variante weist der Stromverteiler 48 eine flache und in Querrichtung verlaufende Stromschiene auf, die als Verteilerblech 52 bezeichnet ist und die mehrere Durchgangslöcher aufweist, durch die als Schraubbolzen ausgebildete Anschlussbolzen 54 geführt sind. An diesen sind die Endabschnitte 34, 36 sowie das zusätzliche Sicherungselement 26 jeweils über die Anschlusselemente 50 über Schraubverbindungen angeschlossen.

Auch die Zusatzleitung 20 ist über einen solchen Anschlussbolzen 54 mit dem zusätzlichen Sicherungselement 26 verbunden.

Hervorzuheben ist, dass die (sämtliche) Anschlussbolzen 54 einen verbreiterten Fußbereich 56 aufweisen, mit dem sie im Isoliermaterial des inneren Gehäuses 30A einliegen (vgl. hierzu Fig. 4). Sie bilden dabei vorzugsweise mit dem inneren Gehäuse 30A eine vorgefertigte Baueinheit, werden also bei dessen Herstellung als Einlegeteil von dem Isoliermaterial umgossen.

Bei der Montage werden dann nachfolgend die Anschlusselemente 50 und beim Stromverteiler 48 ergänzend das als separates Bauteil ausgebildete Verteilerblech 52 auf die Anschlussbolzen 54 aufgesetzt und anschließend mit einer Mutter -gegen ein durch den Fußbereich 56 gebildetes Widerlager verspannt.

Die Verteilereinheit 28 weist vorzugsweise den gleichen Aufbau wie die Erweiterungseinheit 24 auf, jedoch mit dem Unterschied, dass kein zusätzliches Sicherungselement 26 vorgesehen ist. Anstelle des Sicherungselementes 26 ist eine weitere Stromschiene vorgesehen, welche einerseits mit dem Stromverteiler 48 und andererseits mit dem weiteren Anschlussbolzen 54 zum Anschluss der weiteren Zusatzleitung 22 verbunden ist. Hierbei handelt es sich insbesondere um ein Blech, welches endseitig jeweils ein Durchgangsloch zum Anschluss an den jeweiligen Anschlussbolzen 54 aufweist. Ansonsten sind die beiden Einheiten (Erweiterungseinheit 24 sowie Verteilereinheit 28) identisch nach Art von Gleichteilen ausgebildet. Speziell sind die Gehäuse 30 der Verteilereinheit 28 und der Erweiterungseinheit identisch ausgebildet.

### Bezugszeichenliste

- 2: Kabelsatz
- 4: Batterie
- 6: Verteilerbox
- 8: Verbraucher
- 10: Versorgungsader
- 12: Versorgungsader
- 14: weiterer Verbraucher
- 16: Sicherungselement
- 18: zusätzlicher Verbraucher
- 20: Zusatzleitung
- 22: Zusatzleitung
- 24: Erweiterungseinheit
- 26: zusätzliches Sicherungselement
- 28: Verteilereinheit
- 30: Gehäuse
- 30A: inneres Gehäuse
- 30B: Schirmgehäuse
- 30C: äußeres Gehäuse
- 32: Innenraum
- 34: eingehender Endabschnitt
- 36: ausgehend der Endabschnitt
- 38: Anschlussstutzen
- 38A: Anschlussstutzen inneres Gehäuse
- 38B: Anschlussstutzen Schirmgehäuse
- 38C: Anschlussstutzen äußeres Gehäuse
- 40: Dichtelement
- 44: Schirmhülse
- 46: Befestigungskappe
- 48: Stromverteiler
- 50: Anschlusselement
- 52: Verteilerblech
- 54: Anschlussbolzen
- 56: Fußbereich

## Patentansprüche

1. Kabelsatz (2), welcher zur Verwendung in einem Kraftfahrzeug ausgebildet ist, mit zumindest einer Versorgungsader (10, 12) zur Leistungsversorgung eines Verbrauchers (8), mit einer Verteilerbox (6), an der die zumindest eine Versorgungsader (10, 12) im eingebauten Zustand angeschlossen ist, **dadurch gekennzeichnet, dass** eine Erweiterungseinheit (24) vorgesehen ist, die ein Gehäuse (30) mit einem Innenraum (32) aufweist, in dem mindestens ein Stromverteiler (48) angeordnet ist, wobei die zumindest eine Versorgungsader (10, 12) unterbrochen ist und einen in den Innenraum (32) eingehenden Endabschnitt (34) sowie einen aus dem Innenraum (32) ausgehenden Endabschnitt (36) aufweist und die beiden Endabschnitte (34, 36) am Stromverteiler (48) elektrisch angeschlossen sind, wobei weiterhin mindestens eine Zusatzleitung (20) zur elektrischen Leistungsversorgung eines zusätzlichen Verbrauchers (18) vorgesehen ist, und die mindestens eine Zusatzleitung (20) über ein im Innenraum (32) einliegendes zusätzliches Sicherungselement (26) an dem Stromverteiler (48) angeschlossen ist.

2. Kabelsatz (2) nach dem vorhergehenden Anspruch, **dadurch gekennzeichnet, dass** zur Leistungsversorgung des Verbrauchers (8) genau zwei Versorgungsadern (10, 12) vorgesehen sind und an jede Versorgungsader (10, 12) jeweils eine Zusatzleitung (20, 22) angeschlossen ist, wobei die eine der Zusatzleitungen (20) an der einen der Versorgungsadern (10) über das zusätzliche Sicherungselement (26) der Erweiterungseinheit (24) angeschlossen ist.

3. Kabelsatz (2) nach dem vorhergehenden Anspruch, **dadurch gekennzeichnet, dass** die eine der Versorgungsadern (10), an der die eine Zusatzleitung (20) über das zusätzliche Sicherungselement (26) angeschlossen ist, selbst wiederum über ein in der Verteilerbox (6) angeordnetes Sicherungselement (16) abgesichert ist.

4. Kabelsatz (2) nach einem der beiden vorhergehenden Ansprüche, **dadurch gekennzeichnet, dass** lediglich die eine der Zusatzleitungen (20, 22) über die Erweiterungseinheit (24) an der einen Versorgungsader (10) und die andere der Zusatzleitungen (22) über eine zusätzliche Verteilereinheit (28) an der anderen Versorgungsader (12) angeschlossen ist.

5. Kabelsatz nach dem vorhergehenden Anspruch, bei dem die Erweiterungseinheit (24) sowie die zusätzliche Verteilereinheit (28) baugleich sind, mit dem Unterschied, dass in der zusätzlichen Verteilereinheit (28) anstelle des zusätzlichen Sicherungselements (26) eine Stromschiene angeordnet ist.

6. Kabelsatz (2) nach einem der vorhergehenden Ansprüche, **dadurch gekennzeichnet, dass** der Verbraucher (8) über die zumindest eine Versorgungsader (10, 12) im eingebauten Zustand an einer Versorgungsquelle, insbesondere eine Bordnetz-Batterie (4) angeschlossen ist und zwischen der Versorgungsquelle und dem Verbraucher (8) die Verteilerbox (6) angeordnet ist, von der weitere Versorgungsadern zur Versorgung von weiteren Verbrauchern (14) abgehen.

7. Kabelsatz (2) nach einem der vorhergehenden Ansprüche, **dadurch gekennzeichnet, dass** der Stromverteiler (48) als ein Metallbauteil insbesondere nach Art einer Stromschiene ausgebildet ist, an der die Endabschnitte (34, 36) sowie das zusätzliche Sicherungselement (26) jeweils über ein Anschlusselement (50) befestigt, insbesondere angeschraubt sind.

8. Kabelsatz (2) nach dem vorhergehenden Anspruch, bei dem der Stromverteiler (48) ein Verteilerblech (52) sowie mehrere mit diesem elektrisch verbundene Anschlussbolzen (54) aufweist, an denen die Anschlusselemente (50) insbesondere über eine Schraubverbindung befestigt sind.

9. Kabelsatz (2) nach dem vorhergehenden Anspruch, bei dem das Gehäuse (30) ein inneres Gehäuse (30A) aus einem Isolierwerkstoff aufweist, wobei die Anschlussbolzen (54) jeweils einen Fußbereich (56) aufweisen und mit diesen Fußbereichen (56) in dem inneren Gehäuse (30A) eingebettet sind und mit dem inneren Gehäuse (30A) insbesondere eine vorgefertigte Baueinheit bilden.

10. Kabelsatz (2) nach dem vorhergehenden Anspruch, bei dem die Anschlussbolzen (54) am Fußbereich (56) ein Widerlager ausbilden, bei dem weiterhin das Verteilerblech (52) ein separates Bauteil mit Löchern ist, durch die jeweils einer der Anschlussbolzen (54) geführt ist und bei dem ein jeweiliges Anschlusselement (50) zusammen mit dem Verteilerblech (52) gegen das Widerlager verspannt ist.

11. Kabelsatz (2) nach einem der vorhergehenden Ansprüche, **dadurch gekennzeichnet, dass** das zusätzliche Sicherungselement (26) zwei insbesondere gegenüberliegende Anschlusselemente (50) aufweist, wobei es mit dem einen Anschlusselement (50) am Stromverteiler (48) und mit dem anderen Anschlusselement (50) an der Zusatzleitung (20) insbesondere über Schraubverbindungen angeschlossen ist, wobei zum Anschließen der Zusatzleitung (20) insbesondere ein weiterer Anschlussbolzen (54) vorgesehen ist, welcher ebenfalls im inneren Gehäuse (30A) eingebettet ist.

12. Kabelsatz (2) nach einem der vorhergehenden Ansprüche, **dadurch gekennzeichnet, dass** die zumindest eine Versorgungsader (10, 12) eine Abschirmung aufweist, dass das Gehäuse (30) ein leitendes Schirmgehäuse (30B) sowie Anschlussstutzen (38) für den eingehenden und den ausgehenden Endabschnitt (34, 36) aufweist und die Abschirmung jeweils im Bereich der Anschlussstutzen (38) am Schirmgehäuse (30B) angeschlossen ist.

13. Kabelsatz (2) nach einem der vorhergehenden Ansprüche, **dadurch gekennzeichnet, dass** das Gehäuse (30) ein inneres Gehäuse (30A) aus einem Isolierwerkstoff aufweist, welches den Innenraum (32) umgibt, und das Gehäuse (30) weiterhin ein das innere Gehäuse (30A) umgebendes Schirmgehäuse (30B) aus einem leitenden Material sowie ein äußeres Gehäuse (30C) aus einem Isolierwerkstoff aufweist.

14. Kabelsatz (2) nach dem vorhergehenden Anspruch, **dadurch gekennzeichnet, dass** ein jedes der drei Gehäuse ausgewählt aus innerem Gehäuse (30A), Schirmgehäuse (30B) und äußeres Gehäuse (30C) jeweils Anschlussstutzen (38A, 38B, 38C) für die Leitungen, nämlich für die zumindest eine Versorgungsader (12) sowie für die Zusatzleitung (20,22) aufweist, wobei die Leitungen jeweils eine Schirmung aufweisen und diese zwischen einer Schirmhülse (44) und einem der Anschlussstutzen (38B) des Schirmgehäuses (30B) geklemmt ist und weiterhin ein jeweiliger Außenmantel der Leitungen über ein Dichtelement (40) zum jeweiligen Anschlussstutzen (38C) des äußeren Gehäuses (30C) abgedichtet ist.

15. Verfahren zur Konfiguration eines Kabelsatzes (2) zur Verwendung in einem Kraftfahrzeug, bei dem im Rahmen einer ersten Konfiguration ein erstes Kabelsatz-Layout festgelegt wird, welches zumindest eine Versorgungsader (10, 12) zur Leistungsversorgung eines Verbrauchers (8) mit einem vorgegebenen Verlegepfad aufweist, und die Versorgungsader (10, 12) an einer Verteilerbox (6) angeschlossen ist, wobei im Rahmen einer Erweiterungs-Konfiguration ein zweites Kabelsatz-Layout festgelegt wird, welches das erste Kabelsatz-Layout heranzieht und dieses um eine Zusatzleitung (20,22) zur Leistungsversorgung eines zusätzlichen Verbrauchers (18) erweitert, indem eine Erweiterungseinheit (24) vorgesehen ist, die ein Gehäuse (30) mit einem gemeinsamen Innenraum (32) aufweist, in dem zumindest ein Stromverteiler (48) angeordnet ist, wobei die zumindest eine Versorgungsader (10) unterbrochen ist und einen in das Gehäuse (30) eingehenden Endabschnitt (34) sowie einen ausgehenden Endabschnitt (36) aufweist und die beiden Endabschnitte (34, 36) am zumindest einen Stromverteiler (48) elektrisch angeschlossen sind, wobei weiterhin zumindest eine Zusatzleitung (20, 22) zur elektrischen Leistungsversorgung des zusätzlichen Verbrauchers (18) vorgesehen ist, welche über ein im Innenraum (32) einliegendes zusätzliches Sicherungselement (26) an dem zumindest einen Stromverteiler (48) angeschlossen ist.

## Claims

1. Cable set (2), which is configured for use in a motor vehicle, with at least one supply cable (10, 12) for supplying power to a consumer (8), with a distribution box (6) to which said at least one supply cable (10, 12) is connected in the installed state, **characterized in that** an extension unit (24) is provided which has a housing (30) with an interior (32), in which at least one current distributor (48) is disposed, wherein the at least one supply cable (10, 12) is interrupted and has an end section (34), entering the interior (32), and an end section (36), exiting the interior (32), and the both end sections (34, 36) are electrically connected to the current distributor (48), wherein at least one additional line (20) is further provided for supplying electrical power to an additional consumer (18), and the at least one additional line (20) is connected to the current distributor (48) via an additional safety element (26), included in the interior (32).

2. Cable set (2) according to the preceding claim, **characterized in that** exactly two supply cables (10, 12) are provided for the power supply of the consumer (8) and an additional line (20, 22) is connected to each supply cable (10, 12), wherein said one of the additional lines (20) is connected to said one of the supply cables (10) via the additional safety element (26) of the extension unit (24).

3. Cable set (2) according to the preceding claim, **characterized in that** said one of the supply cables (10), to which said one additional line (20) is connected via the additional safety element (26), is itself protected in turn by a safety element (16), arranged in the distribution box (6).

4. Cable set (2) according to one of both preceding claims, **characterized in that** only said one of the additional lines (20, 22) is connected to said one of the supply cables (10) via the extension unit (24) and the other of the additional lines (22) is connected to the other supply cable (12) via an additional distribution unit (28).

5. Cable set (2) according to the preceding claim, wherein the extension unit (24) and the additional distribution unit (28) are of identical construction, with the difference that in the additional distribution unit (28), instead of the additional safety element (26), a busbar is disposed.

6. Cable set (2) according to any one of the preceding claims, **characterized in that** the consumer (8) is connected, in the installed state, via said at least one supply cable (10, 12), to a supply source, in particular an on-board network battery (4), and between the supply source and the consumer (8) the distribution box (6), from which further supply cables extend for supplying other consumers (14), is disposed.

7. Cable set (2) according to any one of the preceding claims, **characterized in that** the current distributor (48) is configured as a metallic component, in particular according to the type of a busbar, to which the end sections (34, 36) as well as the additional safety element (26) are fixed, in particular screwed, each via a connecting element (50).

8. Cable set (2) according to the preceding claim, in which the current distributor (48) has a distribution plate (52) as well as several connecting bolts (54) electrically connected thereto, on which the connecting elements (50) are fixed, in particular by a screw connection.

9. Cable set (2) according to the preceding claim, wherein the housing (30) has an inner housing (30A), made of an insulating material, wherein the connecting bolts (54) each have a lower region (56) and are incorporated with these lower regions (56) in the inner housing (30A) and constitute, with the inner housing (30A), in particular a prefabricated construction unit.

10. Cable set (2) according to the preceding claim, in which the connecting bolts (54) form an abutment at the lower region (56), in which furthermore the distribution plate (52) is a separate component with holes, through each of which one of the connecting bolts (54) is passed and in which a respective connecting element (50), together with the distribution plate (52), is clamped against the abutment.

11. Cable set (2) according to any one of the preceding claims, **characterized in that** the additional safety element (26) has two, in particular opposite, connecting elements (50), wherein it is connected with said one connecting element (50) to the current distributor (48) and with said other connecting element (50) to the additional line (20), in particular by means of screw connections, wherein, for connecting the additional line (20), in particular a further connecting bolt (54) is provided, which is also incorporated in the inner housing (30A).

12. Cable set (2) according to any one of the preceding claims, **characterized in that** said at least one supply cable (10, 12) has a shield, **in that** the housing (30) has a conductive shield housing (30B) as well as connecting pipes (38) for the incoming and the outgoing end section (34, 36) and the shield is connected to the shield housing (30B) in the region of each of the connecting pipes (38).

13. Cable set (2) according to any one of the preceding claims, **characterized in that** the housing (30) has an inner housing (30A), made of an insulating material, which surrounds the interior (32), and the housing (30) further comprises a shield housing (30B), made of a conductive material, surrounding the inner housing (30A), as well as an outer housing (30C), made of an insulating material.

14. Cable set (2) according to the preceding claim, **characterized in that** one of each of the three housings, chosen from inner housing (30A), shield housing (30B) and outer housing (30C) each have connection elements (38A, 38B, 38C) for the lines, namely for the at least one supply cable (12) as well as for the additional line (20, 22), wherein the lines each have a shield and the latter is clamped between a shield sleeve (44) and one of the connection elements (38B) of the shield housing (30B) and, in addition, a respective outer casing of the lines are sealed by a sealing element (40) with respect to the respective connection element (38C) of the outer housing (30C).

15. Method for configuring a cable set (2) for use in a motor vehicle, in which, as part of a first configuration, a first cable set layout is defined, which has at least one supply cable (10, 12) for supplying power to a consumer (8) with a predetermined installation path, and the supply cable (10, 12) is connected to a distribution box (6), wherein, as part of an extension configuration, a second cable set layout is defined, which uses the first cable set layout and extends it by an additional line (20, 22) for supplying power to an additional consumer (18), in which an extension unit (24) is provided, which has a housing (30) with a common interior (32), in which at least one current distributor (48) is disposed, wherein the at least one supply cable (10) is interrupted and has an end section (34), entering the housing (30), as well as an exiting end section (36), and both end sections (34, 36) are electrically connected to at least one current distributor (48), wherein at least one additional line (20, 22) is further provided for supplying electrical power to the additional consumer (18), which is connected to the at least one current distributor (48) via an additional safety element (26), included in the interior (32).

## Revendications

1. Ensemble de câbles (2), qui est conçu pour l'utilisation dans un véhicule automobile, comportant au moins un câble d'alimentation (10, 12) destiné à l'alimentation en énergie d'un dispositif consommateur (8), comportant une boîte de distribution (6) à laquelle ledit au moins un câble d'alimentation (10, 12) est raccordé à l'état monté, **caractérisé en ce qu'**est prévue une unité d'extension (24) qui comporte un boîtier (30) présentant un espace interne (32) dans lequel est disposé au moins un distributeur de courant (48), ledit au moins un câble d'alimentation (10, 12) étant interrompu et présentant un segment d'extrémité (34) entrant dans l'espace interne (32) ainsi qu'un segment d'extrémité (36) sortant de l'espace interne (32), et les deux segments d'extrémité (34, 36) étant raccordés électriquement au distributeur de courant (48), au moins une ligne supplémentaire (20) étant en outre prévue pour l'alimentation en énergie électrique d'un dispositif consommateur supplémentaire (18), et ladite au moins une ligne supplémentaire (20) étant raccordée au distributeur de courant (48) via un élément de sécurité supplémentaire (26) inclus dans l'espace interne (32).

2. Ensemble de câbles (2) selon la revendication précédente, **caractérisé en ce que** pour l'alimentation en énergie du dispositif consommateur (8) sont prévus exactement deux câbles d'alimentation (10, 12) et à chaque câble d'alimentation (10, 12) est chaque fois raccordée une ligne supplémentaire (20, 22), l'une des lignes supplémentaires (20) étant raccordée à l'un des câbles d'alimentation (10) via l'élément de sécurité supplémentaire (26) de l'unité d'extension (24).

3. Ensemble de câbles (2) selon la revendication précédente, **caractérisé en ce que** l'un des câbles d'alimentation (10), auquel ladite une ligne supplémentaire (20) est raccordée via l'élément de sécurité supplémentaire (26), est lui-même protégé à son tour par un élément de sécurité (16) disposé dans le boîtier de distribution (6).

4. Ensemble de câbles (2) selon l'une quelconque des deux revendications précédentes, **caractérisé en ce que** seule l'une des lignes supplémentaires (20, 22) est raccordée à l'un des câbles d'alimentation (10) via l'unité d'extension (24) et l'autre des lignes supplémentaires (22) est raccordée à l'autre câble d'alimentation (12) via une unité de distribution supplémentaire (28).

5. Ensemble de câbles (2) selon la revendication précédente, dans lequel l'unité d'extension (24) ainsi que l'unité de distribution supplémentaire (28) sont de construction identique, à la différence que dans l'unité de distribution supplémentaire (28) une barre conductrice est disposée au lieu de l'élément de sécurité supplémentaire (26).

6. Ensemble de câbles (2) selon l'une quelconque des revendications précédentes, **caractérisé en ce que** le dispositif consommateur (8) est raccordé à l'état monté, via ledit au moins un câble d'alimentation (10, 12), à une source d'alimentation, en particulier une batterie (4) de réseau de bord, et entre la source d'alimentation et le dispositif consommateur (8) est disposé le boîtier de distribution (6), duquel partent d'autres câbles d'alimentation destinés à l'alimentation d'autres dispositifs consommateurs (14).

7. Ensemble de câbles (2) selon l'une quelconque des revendications précédentes, **caractérisé en ce que** le distributeur de courant (48) est configuré sous forme d'un composant métallique, en particulier selon le type d'une barre conductrice, sur laquelle les segments d'extrémité (34, 36) ainsi que l'élément de sécurité supplémentaire (26) sont fixés, en particulier vissés, chacun via un élément de raccordement (50).

8. Ensemble de câbles (2) selon la revendication précédente, dans lequel le distributeur de courant (48) comporte une tôle de distribution (52) ainsi que plusieurs boulons de raccordement (54) reliés électriquement à celle-ci, sur lesquels les éléments de raccordement (50) sont fixés, en particulier par un assemblage par vis.

9. Ensemble de câbles (2) selon la revendication précédente, dans lequel le boîtier (30) comporte un boîtier interne (30A) en un matériau isolant, les boulons de raccordement (54) présentant chacun une zone inférieure (56) et étant incorporés avec ces zones inférieure (56) dans le boîtier interne (30A) et constituant avec le boîtier interne (30A) en particulier une unité de construction préfabriquée.

10. Ensemble de câbles (2) selon la revendication précédente, dans lequel les boulons de raccordement (54) forment au niveau de la zone inférieure (56) une butée, dans lequel en outre la tôle de distribution (52) est un composant séparé doté de trous à travers lesquels est chaque fois passé l'un des boulons de raccordement (54) et dans lequel un élément de raccordement respectif (50) est, conjointement avec la tôle de distribution (52), serré contre la butée.

11. Ensemble de câbles (2) selon l'une quelconque des revendications précédentes, **caractérisé en ce que** l'élément de sécurité supplémentaire (26) comporte deux éléments de raccordement (50) en particulier opposés, en étant raccordé par l'un des éléments de raccordement (50) au distributeur de courant (48) et par l'autre élément de raccordement (50) à la ligne supplémentaire (20), en particulier au moyen d'assemblages par vis, pour le raccordement de la ligne supplémentaire (20) étant prévu en particulier un autre boulon de raccordement (54) qui est également incorporé dans le boîtier interne (30A).

12. Ensemble de câbles (2) selon l'une quelconque des revendications précédentes, **caractérisé en ce que** ledit au moins un câble d'alimentation (10, 12) comporte un blindage, **en ce que** le boîtier (30) comporte une gaine de blindage conductrice (30B) ainsi que des tubulures de raccordement (38) pour le segment d'extrémité entrant et le segment d'extrémité sortant (34, 36) et le blindage est raccordé à la gaine de blindage (30B) chaque fois dans la zone des tubulures de raccordement (38).

13. Ensemble de câbles (2) selon l'une quelconque des revendications précédentes, **caractérisé en ce que** le boîtier (30) comporte un boîtier interne (30A) en un matériau isolant, qui entoure l'espace interne (32), et le boîtier (30) comporte en outre une gaine de blindage (30B) en un matériau conducteur, entourant le boîtier interne (30A), ainsi qu'un boîtier externe (30C) en un matériau isolant.

14. Ensemble de câbles (2) selon la revendication précédente, **caractérisé en ce que** chacun des trois boîtiers choisis parmi le boîtier interne (30A), la gaine de blindage (30B) et le boîtier externe (30C) présente chaque fois des tubulures de raccordement (38A, 38B, 38C) pour les lignes, à savoir pour ledit au moins un câble d'alimentation (12) ainsi que pour la ligne supplémentaire (20, 22), les lignes comportant chacune un blindage et ce dernier étant serré entre une douille de blindage (44) et l'une des tubulures de raccordement (38B) de la gaine de blindage (30B) et, en outre, une enveloppe externe respective des lignes étant rendue étanche par un élément d'étanchéité (40) par rapport à la tubulure de raccordement (38C) respective du boîtier externe (30C).

15. Procédé pour la configuration d'un faisceau de câbles (2) destiné à l'utilisation dans un véhicule automobile, dans lequel, dans le cadre d'une première configuration est défini un premier schéma de montage d'ensemble de câbles qui comporte au moins un câble d'alimentation (10, 12) destiné à l'alimentation en énergie d'un dispositif consommateur (8), comportant un chemin de pose préétabli, et le câble d'alimentation (10, 12) est raccordé à un boîtier de distribution (6), dans le cadre d'une configuration d'extension étant spécifié un deuxième schéma de montage d'ensemble de câbles qui fait appel au premier schéma de montage d'ensemble de câbles et l'étend d'une ligne supplémentaire (20, 22) pour l'alimentation en énergie d'un dispositif consommateur supplémentaire (18), en prévoyant une unité d'extension (24) qui comporte un boîtier (30) présentant un espace interne commun (32), dans lequel est disposé au moins un distributeur de courant (48), ledit au moins un câble d'alimentation (10) étant interrompu et présentant un segment d'extrémité (34) entrant dans le boîtier (30) ainsi qu'un segment d'extrémité (36) sortant et les deux segments d'extrémité (34, 36) étant raccordés électriquement audit au moins un distributeur de courant (48), au moins une ligne supplémentaire (20, 22) étant en outre prévue pour l'alimentation en énergie électrique du dispositif consommateur supplémentaire (18), qui est raccordée audit au moins un distributeur de courant (48) via un élément de sécurité supplémentaire (26) inclus dans l'espace interne (32).
